Europäisches Patentamt

European Patent Office

Office européen des brevets

(11) Publication number: 0 257 697
A1

## (12) EUROPEAN PATENT APPLICATION

(21) Application number: 87201539.1

(22) Date of filing: 13.08.87

(51) Int. Cl.⁴: A01D 82/00 , A01D 78/10

(30) Priority: 14.08.86 NL 8602065

(43) Date of publication of application:
02.03.88 Bulletin 88/09

(84) Designated Contracting States:
DE FR GB NL

(71) Applicant: C. van der Lely N.V.
Weverskade 10 P.O. Box 26
NL-3155 ZG Maasland(NL)

(72) Inventor: van der Lely, Cornelis
7 Brüschenrain
Zug(CH)

(74) Representative: Mulder, Herman et al
Octrooibureau Van der Lely N.V. Weverskade
10 P.O. Box 26
NL-3155 ZG Maasland(NL)

(54) A crop crushing machine.

(57) The invention relates to a haymaking machine
having one or more rake members (38, 39) drivable
about an upwardly directed axis of rotation (40, 41).
A crusher member (73, 80) is arranged near that part
of the circulation path of the tines (51, 52) over
which the crop is discharged by the tines. The crop
gets into contact at a relatively high velocity with
crushing rods (80), which guide the crushed crop
into the desired direction. The crushing action can
be slackened by pivoting said crusher member as a
whole somewhat about a transversely directed shaft
(75).

FIG.4

EP 0 257 697 A1

## A CROP CRUSHING MACHINE

The invention relates to a haymaking machine having at least one rake member drivable about an upwardly directed axis of rotation and comprising at least one crusher member arranged in the area wherein the crop taken up by the rake member is discharged.

Prior art machines of this type (GB-A-2 065 435) comprise a flexible crop take-up member which displaces crop upwardly to within the reach of a drum-shaped hub having a smaller diameter than said flexible member. The, said hub is provided with outwardly directed rods which exert the crushing action. The crop assembled on the drum-shaped hub has a relatively low velocity of rotation and the rods guiding the crop outwardly will be able to exert only a slight crushing action.

An other embodiment according to the said publication discloses a rotor which rotates about a horizontal, transversely directed shaft, is located above said flexible member and is provided with projections, which said rotor, in contradistinction to the former embodiment, has to take up the crop picked-up by said flexible member directly. However, part of the crop will be deposited outside the reach of the rotor in uncrushed condition. A slackening of the crushing action in case of sensitive crop is not possible.

The invention contemplates to obviate these drawbacks in that the crusher member extends at least partly along that part of the circulation path of the tines of the rake member taking up the crop over which crop is deposited by the tines.

In this manner it is possible to achieve that substantially all of the crop displaced by the rake member is crushed intensively, in particular when the crusher member is arranged in the immediate vicinity of the tines discharging the crop. In case sensitive crop is treated, it is possible to adjust the crusher member in order to effect a slackening of the crushing action.

For a better understanding of the invention and to show how the same may be carried into effect, reference will now be made, by way of example, to the accompanying drawings, in which:

Figure 1 is a plan view of an embodiment of a machine according to the invention;

Figure 2 is a side view of the machine according to the invention, taken in the direction of the arrow II in Figure 1;

Figure 3 is partially a view and partially a cross-section taken on the line III-III in Figure 1;

Figure 4 is, to an enlarged scale, a plan view of a portion of the machine taken in the direction of the arrow IV in Figure 2 and

Figure 5 is a horizontal side view taken on the line V-V in Figure 4.

The inventive idea is illustrated and described in detail with reference to an embodiment. However, the inventive idea is not limited to this embodiment but may also relate to another processing machine of a nature different from that of the other illustrated and described processing machine, but by means of which an analogous object is fulfilled.

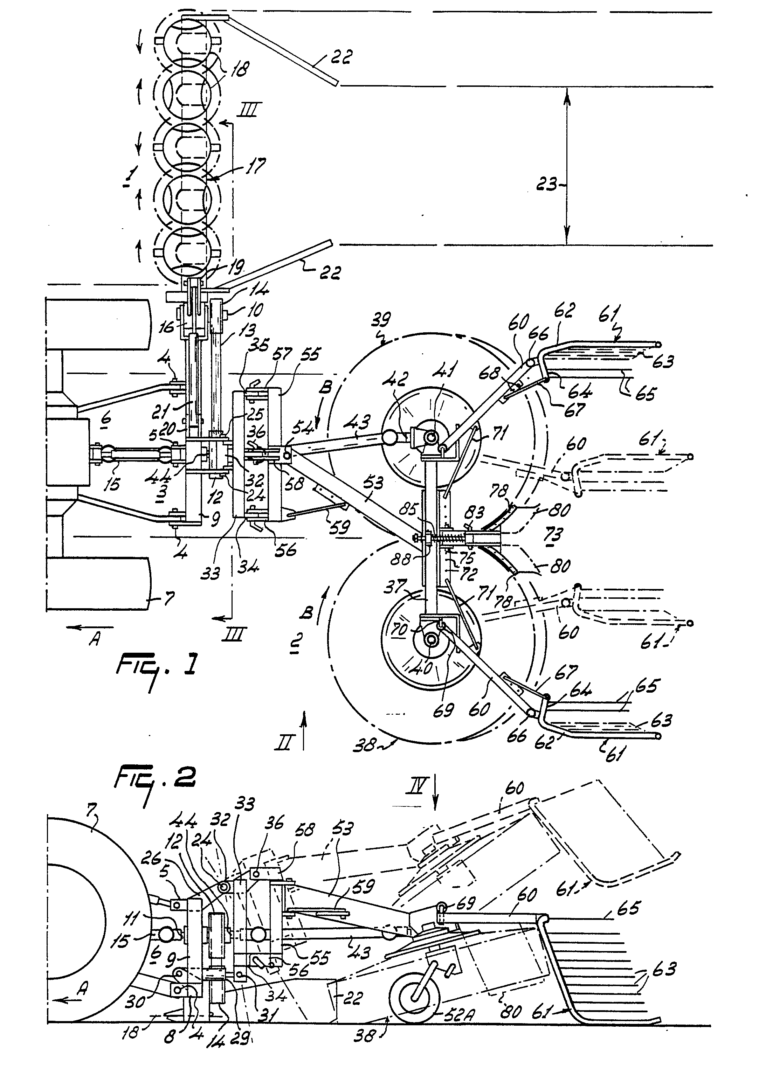

The machine shown in Figure 1 comprises a mower 1 as well as another processing machine, in this case in the form of a haymaking-crushing machine 2 which can be used only as a haymaking machine, as a crusher or simultaneously for both purposes (e.g. as a rake).

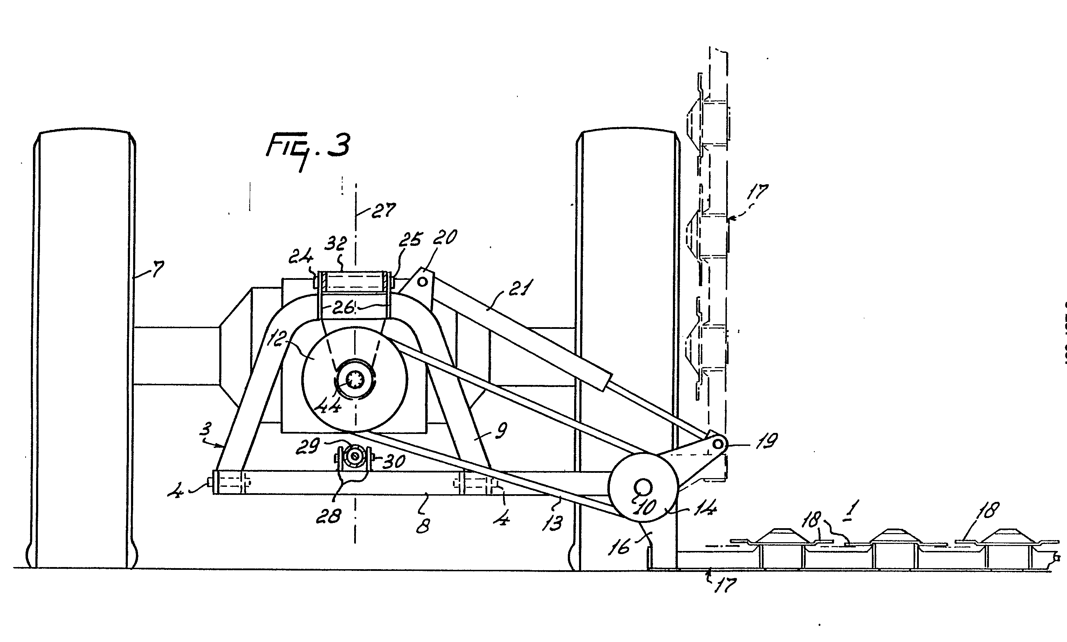

The mower 1 comprises a frame 3 provided with two spaced-apart lower coupling points 4 (Figures 1 and 3) and an upper coupling point 5, which can be coupled to the lower lifting arms and to the top rod, respectively, of a three-point lifting hitch 6 of a tractor 7 moving the machine. The frame 3 includes a straight, horizontal carrier beam 8 (Figure 3) which carries the lower coupling points 4 and, in the operating position, is disposed at some distance above the soil, to which beam an upwardly extending trestle 9 is welded which, seen in the direction of operative travel A, has the shape of an inverted U or V. The trestle has its two lower free ends connected to the upper side of the beam 8, extends upwardly and carries the upper coupling point 5 at its upper side. The beam 8 ends near a lateral boundary of the tractor and in that region carries a pivotal shaft 10 which extends parallel to the direction of operative travel A and also parallel to an ingoing shaft 11 of the mower. In a view as shown in Figure 3, the ingoing shaft is disposed within the space enclosed by the trestle 9 and the beam 8 and bears on the trestle 9. The ingoing shaft 11 extends to beyond the trestle 9 (Figure 2) and in that region carries a pulley 12 which via a set of V-belts 13 is in driving connection with a pulley 14 which is drivably supported about the pivotal shaft 10.

The ingoing shaft 11 and consequently the pullies 12 and 14 are drivable by means of an intermediate shaft 15, which couples the ingoing shaft 11 to the power take-off shaft of the tractor 7.

A vertically extending carrier 16, which also comprises a gear transmission, is pivotally connected about the pivotal shaft 10 to the beam 8. The carrier 16 is rigidly connected to a cutter bar 17 which extends transversely to the direction of operative travel A and, during operation, bears on the soil. The cutter bar 17 comprises a plurality of mowing discs 18 which are drivable about upwardly extending shafts by means of one drive mechanism located in the beam 17, which drive mechanism is driven from the pulley 14 by the gear drive mechanism in the carrier 16. The mowing discs 18, fitted with knives, are driven in the rotational directions as shown in Figure 1, but a different combination of directions of rotation is equally possible. A lever 19 is rigidly connected to the carrier 16. Between the end of the lever 19 which, in the working position, extends obliquely outwardly and upwardly and a lug 20 provided near the upper side of the trestle 9 there is arranged a hydraulic cylinder 21 which is operable from the driver's seat and by means of which cylinder the lever 19 together with the carrier 16 and the cutter bar 17 is hingeable about the horizontal pivotal shaft 10 extending in the direction of operative travel A from the working position to an upwardly directed transportation position of the cutter bar 17, as is illustrated in Figure 3 by means of broken lines. In the transportation position the mower 8, 16, 17, 19 is fully clear of the soil.

The cutter bar 17 can work a strip of soil of a width of approximately 2 metres which is located at the outer side of a lateral boundary of the tractor 7 and is approximately contiguous to said boundary.

As is shown in Figure 1, the mower 1 includes swath-forming members 22. The front sides of the swath-forming members 22 are contiguous near the cutter bar 17 to the outermost boundaries of the strip of crop mown by the mowing members 18, and, taken in the reardward direction, are arranged mutually converging so that the members 22 deposit the mown crop in a swath, whose width 23 is less than the working width of the cutter bar 17. Taken in a direction transversely to the direction A, the boundary, at the side of the tractor, of the swath 23 is remote from the near boundary of the strip of crop to be mown. The same also applies to the outermost boundary of the mowing swath which, taken in a direction transversely to the direction A, is also remote from the outermost boundary of the strip of crop to be mown. In this manner it is achieved that, in a subsequent operating run of the machine, strip-shaped spaces are obtained which are free from crop, through which spaces the wheels of the tractor can pass.

Near the upper coupling point 5, the trestle 9 is provided with basically two different coupling points 24 and 25, which each include a plate 26 extending rearwardly from the upper side of the trestle 9, which plates 26 each have an aperture at their ends located behind the rear side of the trestle 9; the centre lines of said apertures are in alignment. The two plates 26 are spaced apart and are arranged symmetrically relative to a vertical plane through the centre line of the ingoing shaft 11, which plane 27 (Figure 3) coincides with the vertical symmetry plane of the trestle 9 and, during operation, approximately with the longitudinal symmetry plane of the tractor 7.

On the upper side of the beam 8 of the frame 3 of the mower 1 there are welded two lugs 28, between which one end of a hydraulic cylinder 29 is arranged pivotally about a pivotal shaft 30 connected to the lugs 28 and extending perpendicularly to the symmetry plane 27. The hydraulic cylinder 29 extends rearwardly from the pivotal shaft 30.

The apertures in the rearmost ends of the two plates 26 and a fork provided at the rearmost end of the piston rod of the hydraulic cylinder 29 form three connecting points 24, 25 and 31, respectively, which are provided at the rear sides of the frame 3 (Figures 1 and 3).

Consequently, the frame 3 of the mower 1, located entirely behind the tractor 7, has coupling points 4 and 5 at its front side and connecting points 24, 25 and 31 at its rear side. By means of a coupling rod 32 (Figure 3) extending transversely to the direction of operative travel A and the plane 27, the connecting points 24 and 25 are connectable to the upper side of an auxiliary trestle 33 and the connecting point 31 is connectable to the mid-way point of the bottom side of said auxiliary trestle 33. Consequently, the auxiliary trestle 33, which is arranged parallel to an upwardly directed plane, is pivotal with respect to the trestle 9 about a pivotal shaft (which coincides with the centre line of the coupling rod 32) directed perpendicularly to the symmetry plane 27 by means of the hydraulic cylinder/piston rod combination 29 which is operable from the driver's seat of the tractor, by means of which the rearmost and lowermost connecting point 31 is pivotal relative to said latter pivotal shaft to the front and to the rear, respectively. The pivotal shaft 32 perpendicularly crosses the pivotal shaft 10.

At its lower side the auxiliary trestle 33 is provided with lower, different coupling points 34 and 35, which are spaced apart and are arranged symmetrically with respect to the plane 27. Near its upper side the auxiliary trestle 33 is provided with a upper, different coupling point 36 which, in this embodiment, like the other coupling points 34 and 35, is arranged behind the rear side of the auxiliary trestle 33 (Figures 1 and 2). The coupling points 34 to 36 are intended for coupling thereto another processing machine provided with a three-point coupling.

The other processing machine 2 is, at least in this embodiment, in the form of a haymaking machine comprising rake members which rotate about upwardly extending axes, which machine is suitable for tedding crop and depositing tedded crop into a swath or depositing crop into a narrow swath, whether or not provided with an operative crushing device.

The other processing machine 2 has a frame beam 37 which extends transversely to the direction of operative travel A and at both ends is provided with a raking member 38, 39. The raking members 38 and 39 are power-drivable about the rotary shafts 40 and 41, respectively. Taken in the upward direction, the upwardly directed rotary shafts 40 and 41 are arranged obliquely forwardly and, at least in this embodiment, enclose with a vertical line an angle of approximately 15°; however, this angle may also have a different, more specifically a smaller, value. The processing machine 2 has an ingoing shaft 42 which extends forwardly and is drivably coupled by means of an intermediate shaft 43 provided with universal joints to a rearwardly directed extension of the shaft 11 of the mower 1, the said extension projecting to beyond the rear side of the pulley 12 and from there being denoted by the reference numeral 44.

The ingoing shaft 42 of the processing machine 2, which is driven via the power take-off shaft of the tractor, the intermediate shaft 15, the shaft 11, 44 and the intermediate shaft 43 drives in known manner the raking member 39 and a drive shaft accommodated in the frame beam 37 drives the raking member 38 in mutually opposite directions B.

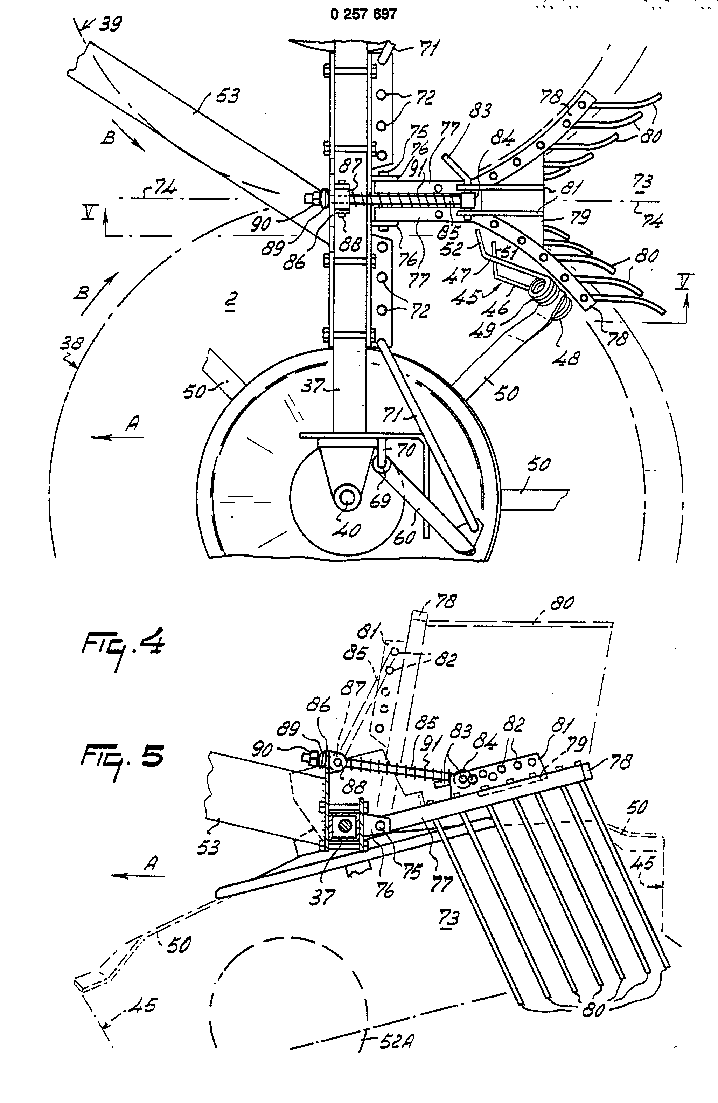

Each of the two raking members 38 and 39 includes a plurality of tine sets 45. Each tine set 45 comprises two spring-loaded tines 46 and 47 which are located approximately one above the other (Figure 4) and are each resiliently connected by means of a set of windings 48 and 49, respectively, to the end of an associated spoke 50 of the relevant rake wheel 38 and 39, respectively. Taken in a direction away from the associated windings, the tines 46 and 47 extend rearwardly and downwardly with respect to the direction of rotation B and near their free ends are folded outwardly so as to form hooks, said outwardly folded terminal portions 51 and 52, respectively, substantially constituting the active portions of the tines of the tine set. The raking members are located above the ground at such a height that the tine ends 51 and 52 of each tine set reach for a portion of their foremost path half to near the soil or near the stubbles on the field and over this part of their paths take up the crop and thrown same obliquely upwardly in the rearward direction in the area between the two raking members.

The raking members are supported by ground wheels 52A which are adjustable and lockable such that the slope of the axes of rotation can be set in a manner known per se.

Halfway the length of the frame beam 37 a carrier or puller arm 53 is rigidly connected thereto. The carrier 53 extends from the frame beam 37 obliquely forwardly such that, seen in the direction of operative travel A, the front end of the carrier is located approximately in front of the axis of rotation of the right-hand rake wheel 39. The front end of the carrier 53 is connected capable of pivoting about an upwardly directed pivotal shaft 54 to a trestle 55 forming part of the rake wheel machine 2. Seen in the direction of operative travel A, the trestle 55 is positioned straight behind the auxiliary trestle 33 forming part of the frame 3 of the mowing machine 1. The trestle 55, which, seen in the direction of operative travel A, is in the shape of an inverted U or V and, in the arrangement shown in Figure 1, is also symmetrical with respect to the symmetry plane 27, has forwardly extending lower coupling points 56 and 57 and an upper coupling point 58 which fit on the lower, other coupling points 34 and 35 and on the upper, other coupling point 36 of the auxiliary trestle 33, respectively. The trestle of the haymaking-crushing machine 2 forms together with its coupling points 55 to 58 a three-point coupling, by means of which the haymaking machine 2 is connected to the frame 3 of the mowing machine 1 by means of detachable locking pins.

The angle which the carrier 53 encloses, seen in plan view according to Figure 1, with the trestle 55 can be set in a plurality of positions by means of an adjusting arm 59. Therefore, using the adjusting arm 59, it is possible to change the direction of throw of the raking members 38 and 39 relative to the direction of operative travel A and to set the machine 2 laterally relative to the mower, whilst by means of said adjusting arm the haymaking machine 2 can be pivoted such around the pivotal shaft 54 that a transportation position of the haymaking machine can be established in which, seen in the direction of operative travel A, the width of the machine is significantly less than the width of the machine in the operating position shown in Figure 1. In this situation, the trestle 55 surrounds the intermediate shaft 43 with such a clearance that a change in the direction of the intermediate shaft 43 does constitute an impediment to this shaft. In the arrangement shown in Figure 1, in which the axis of rotation 41 is in a position approximately near the symmetry axis 27, the rake member 39 picks up a swath which is lying in a position symmetrical to the symmetry plane 27 and conveys same through between the two rake members 38 and 39 to the rear, immediately subsequent thereto the crop is deposited into a swath of an optionally adjustable width.

To that end there is provided near each of the two ends of the frame beam 37 an arm 60 which, seen in the direction of operative travel A, extends rearwardly from the relevant frame beam end. Each arm 60 has at its rearmost end a crop guide member 61 which, seen in a plan view as shown in Figure 1, is adjustable to a plurality of positions and lockable relative to the associated arm 60. By means of its front side, each guide member 61 is contiguous to the path described by the tines of the tine sets 45 of the rake member 38 or 39, behind which said guide member is arranged. Each guide member 61 includes a tubular holder 62 whose front part is directed upwardly and whose bottom part is folded to the rear; by means of said folded part the guide member slides over the soil and follows the irregularities thereof. At the upwardly directed part of the holder 62 there are provided rearwardly directed spring-steel rods 63, which all are directed approximately horizontally and rearwardly and whose rear ends extend freely. At its upper side, the holder 62 has an inwardly curving portion 64, on which rods are arranged that also extend rearwardly and are denoted by the reference numeral 65. Seen in the upward direction, the upwardly extending portion of the holder 62 is directed slightly obliquely outwardly so that, seen in the direction of operative travel A, the holder 62, 64 together with the rods 63 and 65 is capable of forming a swath, whose outer boundary approximately has the shape of the greater part of a circle. Each of the guide members 61 is connected pivotally, by means of an approximately vertically extending pivotal shaft 66 to the rearmost end of the associated arm 60. The end of the inwardly directed portion 64 of the holder 62, which end is remote from the pivotal shaft 66, is provided with a pivotal adjusting arm 67 which extends forwardly in an approximately horizontal direction and whose foremost end can be inserted in one of a plurality of apertures 68 made in the arm 60, so that, seen in a plan view, the guide member, pivoting about the pivotal shaft 66, can be locked in a plurality of positions with respect to the associated arm 60.

At its front side, each of the arms 60 is pivotal with respect to the remaining portion of the haymaking machine 2 about an approximately vertical pivotal shaft 69, whilst the pivotal shaft 69 is pivotal with respect to the frame beam 37 about a horizontal pivotal shaft 70 which is directed parallel to the frame beam 37 (Figure 4). By means of the pivotal shaft 69, the angle enclosed by the two arms 60 can be set, whilst the relevant guide member 61 can follow the irregularities of the soil by means of the pivotal shaft 70. To ensure that the angle between the two arms 60 can be fixed, one end of an adjusting arm 71 is pivotally connected to the arm 60 remote from the pivotal shaft 69: the other end of the adjusting arm 71 can be inserted into one of a plurality of apertures 72 provided in the frame beam 37.

With the aid of the adjusting arms 71 the guide members 61 can be adjusted to the position shown by means of solid lines in Figure 1, said guide members determining the boundary width of the crop thrown rearwardly and sidewardly by the rake members 38 and 39 in a tedding position of the machine; in that case the crop is thrown over a comparatively wide strip of soil, the width of which approximately corresponds to the working width of the raking members. In this case the configuration in which the crop is deposited is designated as a "swath".

In the position of the guide members 61, indicated by broken lines, the crop moved by the rake members 38 and 39 is deposited on a strip of soil, whose width is significantly less than the working width of the two rake members; the configuration in which the crop is then deposited is also designated as a "swath".

In all the positions of the guide members 61, said members are so adjusted by means of the adjusting arms 67 with respect to the arms 60 that the rods 63 and 65 extend approximately parallel to the direction of operative travel A. The setting of the arms 60 is effected with the aid of the adjusting arms 71.

It should be noted that it is recommendable for each of the tine sets 45 of the rake members to have an adjusting mechanism (not shown) which is arranged such that the active tines 51, 52, in the working position wherein the crop is to be distributed over a large width, must be adjusted approximately radially with respect to the associated axis of rotation, whilst said tine ends must be directed rearwardly with respect to the direction of rotation B in a working position wherein the crop is to be deposited into a narrow swath.

The deposition of the crop in a narrower or wider swath relates to a raking function of the machine. Alternatively, such a raking function can be effected in a different manner, as will be described in further detail in what follows.

The haymaking machine 2, alternatively denoted "further processing machine" elsewhere in the description, is provided at its rear side with a crushing device 73. In view of the fact that the rake members 38 and 39 are arranged symmetrically with respect to a vertical plane 74 in the direction of operative travel A (Figure 4), the crushing device 73 is arranged symmetrically with respect to said plane 74. The plane 74 extends parallel to the symmetry plane 27 but, with respect to the cutter bar 17, is located at that side of the cutter bar 17 which is remote from the plane 27. Near the mid-point of the frame beam 37, a horizontal pivotal shaft 75 extending transversely to the direction of operative travel A is provided at the rear side of the frame beam 37 by means of lugs 76 connected thereto. Two closely-spaced, rearwardly directed carriers 77, which extend parallel to the symmetry plane 74, are pivotal about the pivotal shaft 75 (Figures 4 and 5), said carriers being folded outwardly to form rod holders 78 remote from the frame beam 37 symmetrically with respect to the plane 74. The outwardly folded parts 78 are rigidly interconnected by means of a coupling plate 79 which extends perpendicularly to the plane 74 and parallel to the longitudinal direction of the frame beam 37. In the plan view of Figure 4, each rod holder 78, which is curved as a circle segment and is arranged coaxially relative to the associated axis of rotation, seen with respect to the associated rotary axis 40 and 41, respectively, covers in this embodiment a circumferential angle of approximately 30°. However, said holders 78 carrying the actual crushing members may cover a smaller or a larger circumferential angle depending on the nature of the crop, the nature of the machine, the rate of travel and the number of revolutions, but in a plan view may alternatively be of a rectilinear shape. Each strip-shaped holder 78 is provided with a row of apertures, in which are connected the upper ends of a plurality of crusher rods 80. The crushing member including the rods 80 consequently has, in a plan view, the shape of a V. From the associated holder 78 located above the respective relevant rake member 38 and 39, the rods 80 extend obliquely downwardly and rearwardly (Figures 4 and 5). The rods 80 are arranged in that region where the rake members 38 and 39 throw the crop in a rearward and obliquely outward direction. At their bottom sides, the rods 80 have freely extending ends. In an operative position, said free ends are in the region of or below the plane determined by the ends of the tines 51 of the tine sets 45, so that the crop or substantially all the crop thrown by the rake members comes into contact with one or more of the rods 80. Seen in a plan view (Figure 4), the rods 80 first extend from their connection in the holder 78 parallel to the direction of operative travel A or parallel to the plane 74, and thereafter near their free ends curve slightly outwardly into the direction of the guide members 61, but, in a plan view they may also be straight over their entire length and be arranged, for example, parallel to the plane 74. In general, the rods are in parallel positions relative to each other. Each of the two rows of rods extends parallel to the direction of movement of a crop portion present near one or more rods (in this case adapted to the distribution pattern of a haymaking machine comprising rake members which rotate about upwardly extending axes, but, in a plan view, one row of crusher rods may alternatively be arranged transversely to the direction of movement, e.g. radially relative to the axis of rotation of a rake member, and/or perpendicularly to the plane 74 and thus enclose an angle with the direction of movement of the crop.

On the upper side of the coupling plate 79, two spaced-apart adjusting plates 81 are fastened, which plates extend parallel to the symmetry plane 74 and are provided with a plurality of apertures 83 (Figures 4, 5). A locking pin 83 may be inserted through two apertures 82 provided in the plates 81. The locking pin 83 locks in each of its possible positions, which are determined by the apertures 82 selected, a bushing 84 relative to the plates 81 and hence relative to the rods 80. A rod 85 which extends forwardly from the bushing 84 is connected thereto. The centre line of the rod 85 is located in the symmetry plane 74. Seen in the direction of operative travel A, the foremost end of the rod 85 is inserted through an aperture provided in a plate 86 which extends upwardly from the frame beam 37 and is clamped against the front side of said frame beam. This aperture is in the form of an upwardly directed slotted hole to allow of a diversity of angular positions of the rod 85 relative to the plate 86. If so desired, the rod 85 can be supported and guided by a bushing 87 which is pivotal about a pivotal shaft 88 which extends perpendicular to the plane 74, said pivotal shaft being locked with respect to the plate 86. At that front side of the plate 86 remote from the bushing 84, the rod 85 is enclosed by a pair of opposed cup springs 89, which at its rear side bears against the plate 86 and, at least in the position shown, bears with its front side against a nut 90 which is turned on the front end of the rod 85 by means of thread.

In the embodiment shown in Figures 4 and 5, the locking pin 83 is inserted through the set of apertures 82 nearest to the plate 86. In this configuration, the crusher member in the form of the rods 80 is in its most active state, as the lowermost ends of the rods 80 project furthest in the region wherein the crop is placed by the rake members. During operation of the crusher member 73, the tines of the rake members cooperate with the rods 80 in that the tines in the region wherein they release the picked-up crop move immediately adjacent to or near and along the rods 80. The crop thrown by the tines 51, 52 flies at a high speed against the rods 80, is partly wrapped around one or more of said rods, is bent and slides towards the free rod ends downwardly and/or outwardly in the form of a swath, whilst another part is thrown along the inner side of the row of rods or along the outer side of such a row, whereby also a crushing effect occurs before the crop falls into the swath.

If a lower degree of crushing is desired, the locking pin 83 is inserted through one of the next apertures 82, so that the operative rod length is reduced. In this situation, the entire crusher member 77, 78, 79, 80 is pivoted upwardly about the pivotal shaft 75 through an angle determined by the relative distance between the said apertures.

If no crushing effect is desired at all, the locking pin 83 is inserted through the set of apertures 82 which is most remote from the pivotal shaft 75 or the plate 86. In this position, the entire crusher member is pivoted upwardly into the position denoted by the broken lines (Figure 5), the foremost end of the rod 85 projecting forwardly for the greater part of its length through the aperture in the plate 86. In this position, seen in plan view, the rods 85 are directed approximately parallel to the soil, as is shown in Figure 5, and are fully outside the throwing range of the rake members 38 and 39. The carriers 77, which in the operative position of the crusher member are directed approximately parallel to the path described by the tines, are directedtrongly upwardly in this transportation position.

If so desired, a pressure spring 91 can be wrapped around the rod 85, which spring in the operative position shown in Figure 5 bears with some pre-tension against the bushing 84 or the bushing 87, respectively. The crusher member is kept in its operative position by its own weight, but can be pivoted upwardly for a short period of time about the pivotal shaft 75 by the crop thrown against the rods 80, which may produce unwanted shocks.

The compressive force of the spring 91 produced in the operative position of the crusher member, which force exercises a downward torque around the pivotal shaft 75 on the crusher member, can suppress or prevent these shocks. On the other hand, a slightly spring-induced and bumping pivotal movement around the pivotal shaft 75 may be advantageous in that it causes crushed crop sticking around the rods to slide downwards to the soil.

If the locking pin 83 is inserted through a subsequent set of apertures 82, which are located more remotely from the pivotal shaft 75, so that the active length of the rods 65 and hence the crushing effect is reduced, the pretension of the spring 91 in the operative position of the crusher member is the same again, thus causing a slighter upward spring-induced pivoting of the crushing member to be produced; such a position is important for the treatment of sensitive crop. In case the pair of opposed spring cups 89 is arranged, the downward movement of the crusher member is slightly damped thereby; similarly, the nature of the shocks ans hence the vibration of the rods 80 can be influenced.

Preferably, the rods 80 are made of spring-steel rod material in order to prevent the rods 80 from breaking after prolonged use.

During operation, the machine comprising the mower 1 and the further processing machine 2, 73, coupled to the three-point lifting hitch 6 of the tractor 7, is moved by said tractor 7 in the direction of operative travel A and is driven from the power take-off shaft of the said tractor 7. The frame 3 of the mower 1 includes the coupling points 4, 5 for attachment of the mower to the three-point lifting hitch of the tractor and also the further coupling points 34 to 36 for coupling the further processing machine 2, 73 to the frame 3 of the mower by means of a three-point coupling 56 to 58. By means of the three-point coupling 56 to 58, the further procesing machine 2, 73 can be lifted, independently of the position of the cutter bar 17, to an inoperative position, as indicated in Figure 2 by broken lines. For that purpose the hydraulic cylinder 29 is energized from the driver's seat of the tractor, as a result of which the auxiliary trestle 33 pivots to the rear, pivoting about the coupling rod 32 at its bottom side (position shown in Figure 2 by a broken line), so that the other machine is brought to its inoperative positions.

One of the processing machines forming part of the machine, the cutter bar 17, processes crop at one side of the tractor's side and the further processing machine 2, 73 processes crop at the other side of said side of the tractor. Since both machines can be brought to an operative position and an inoperative position, respectively, independently of each other, it is possible for crop e.g. to be mown and/or crushed, and/or tedded, and/or spread, and/or raked together in one single processing run.

In addition, it is possible to use for tedding and/or crushing and/or spreading and/or raking a machine which alternatively can be used easily without a further operative mower.

The working rate of the machines can be high, and the mower 1 can mow whilst the crusher-tedder machine 2, 73 is in the lifted state and vice versa.

The machine according to the invention can perform one or more of the following operations in one single processing run:
mowing,
mowing and crushing,
mowing and tedding,
mowing and spreading,
mowing and raking together two mown swaths,

crushing,
tedding,
spreading and
raking together two swaths.

Transportation by road is very simple, as the various machines can be lifted easily individually with respect to the tractor.

If the mower 1 and one or more parts of the further processing machines 2, 73 are used in a field, it is possible to effect the following processing sequence, which is given as an example of a method. Firstly, the mower can be made operative, the further processing machine 2, 73 being lifted by means of the hydraulic cylinder 29 to its inoperative position as shown in Figure 2 by means of a dotted line. With the aid of a mower a strip of crop e.g. along the entire periphery of the field boundary is mown, which operation is effected e.g. once or twice in the counter-clockwise direction. One or two adjacently located swaths 23 can be formed thereby. Thereafter the operating direction or the direction of operative travel A, respectively, is reversed, so to the clockwise direction. Then, first of all the further processing machine 2, 73 is adjusted to its operative position by action of the hydraulic cylinder 29, whilst the mower 1 remains in its operative position. The two rake members 38 and 39 then pick up the swath or swaths formed during the previous processing run or runs, whereby the crop displaced by the rake members is deposited optionally in a wide swath (guide members 61 in the position as shown by solid lines in Figures 1) or in a narrow swath (guide members 61 in the position indicated in Figure 1 by means of broken lines), whether or not in combination with an operative crusher member.

It should be noted that the tedder-crusher machine 2 in accordance with the embodiment has a working width which is one-and-a-half to two times as large as that of the mower 1. The working width of the machine 2 is approximately three metres.

In the meantime the mower forms, taken with respect to the centre of the field, a subsequent swath 23 located at the inner side of the swaths which had been deposited by the rake members. Once the machine has driven one full round, the tractor is moved to a more inward position and the rake member 39 picks up the swath 23 arriving under the tractor and deposits same in the desired swath shape, whilst the mower again forms a swath located at the other side of the tractor boundary. This processing operation can continue until the centre of the field is reached. When the crop has dried to some extent, the swaths formed can be treated again in a clockwise or counter-clockwise direction, the cutter bar 17 having been moved about the pivotal shaft 10 (Figure 3) to the inoperative position as indicated by the broken lines and the further processing machine 2, 73 having been adjusted to its operative position. In this situation the crop can be tedded or, if this had already been done in the first processing run, be deposited into a narrow swath. If the crop had not yet been crushed during the first processing run, the crusher member 73 can be moved to its operative position as shown in Figure 5 by solid lines. In this manner and in analogous manners all the processing operations enumerated in the foregoing can be performed by one single machine.

The invention is not limited to the above-described further processing machine. For example, this further machine may be constituted by a side-feed rake having two rake members rotating in the same direction wherein the crop, before being deposited in a swath located next to the mowing swath, is passed through a row of crusher rods directed transversely of the flow of the crop. This crushing action is immediately subsequent to the processing operation performed by the two rake members.

## Claims

1. A haymaking machine having at least one rake member (38, 39) drivable about an upwardly directed axis of rotation (40, 41) and comprising at least one crusher member (73, 80) arranged in the area wherein the crop taken up by the rake member is discharged, characterized in that the crusher member (73, 80) extends at least partly long that part of the circulation path of the tines (51, 52) of the rake member taking up the crop over which crop is deposited by the tines.

2. A haymaking machine as claimed in claim 1, characterized in that the crusher member (73, 80) is adjustable to more than one working position.

3. A haymaking machine as claimed in claim 1 or 2, characterized in that the crusher member (73, 80) is adjustable to and lockable in a plurality of working positions about a pivotal shaft (75).

4. A haymaking machine as claimed in any one of claims 1 to 3, characterized in that the crusher member (73, 80) is adjustable to and lockable in inoperative position about a pivotal shaft (75).

5. A haymaking machine as claimed in claim 3 or 4, characterized in that the pivotal shaft (75) is directed approximately horizontally and transversely to the direction of operative travel.

6. A haymaking machine as claimed in any one of claims 1 to 5, characterized in that the crusher member (73, 80) is arranged under spring action with respect to the frame at least as a whole in a working position.

7. A haymaking machine as claimed in claim 6, characterized in that the crusher member (73, 80) is arranged under spring action in the upward direction under the influence of forces exercised by the crop.

8. A haymaking machine as claimed in any one of the preceding claims, characterized in that, in plan view, the crusher member (73, 80) is V-shaped and is arranged at the rear side of the machine.

9. A haymaking machine as claimed in any one of the preceding claims, characterized in that the machine includes two rake members (38, 39) which are drivable in opposite directions and are provided with tines (51, 52), the crop displaced by the rake members in an area located between the rotary axes (40, 41) being moved rearwardly, taken in the direction of operative travel.

10. A haymaking machine as claimed in any one of the preceding claims, characterized in that the tines (51, 52) are movable near and along a crusher member (80).

11. A haymaking machine as claimed in claim 10, characterized in that the tines cooperate with the crusher member.

12. A haymaking machine as claimed in any one of claims 1 to 11, characterized in that the crusher member (73) includes at least one row of crusher rods (80), said rods being arranged relative to each other approximately in parallel and, taken in the direction of displacement of the crop, being directed obliquely forwardly and downwardly.

13. A haymaking machine as claimed in claim 12, characterized in that, in a plan view, the row extends approximately parallel to the direction of displacement of the crop.

14. A haymaking machine as claimed in claim 12, characterized in that, in a plan view, the row encloses an angle with the direction of displacement of the crop.

15. A haymaking machine as claimed in any one of claims 12 to 14, characterized in that the crusher member (73) comprises two rows of rods (80), which rows crush the crop over substantially the entire area in which the crop is displaced.

16. A haymaking machine as claimed in any one of claims 12 to 15, characterized in that the lower ends of the rods (80) constitute the free ends.

17. A haymaking machine as claimed in any one of claims 12 to 16, characterized in that the rods (80) are straight ones.

18. A haymaking machine as claimed in any one of claims 12 to 16, characterized in that the rods (80) are bent outwardly in the direction of their free ends and are curved in the direction of crop guide members (61), which deposit the crushed crop into a swath.

FIG. 1

FIG. 2

FIG. 3

0 257 697

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 022 387 (VAN DER LELY)<br><br>* Page 2, line 124 - page 3, line 51; page 4, lines 98-121 * | 1,2,6, 10,11 | A 01 D 82/00<br>A 01 D 78/10 |
| D,X | GB-A-2 065 435 (BELRECOLT)<br><br>* Page 3, lines 51-72; figures 1,14 * | 1,8-11 ,15 | |
| Y | | 2-5,12 ,13,16 -18 | |
| Y | FR-A-2 403 736 (PATENT CONCERN)<br>* Whole document * | 2-5 | |
| Y | GB-A-1 533 922 (VAN DER LELY)<br><br>* Page 1, line 70 - page 2, line 24; page 3, lines 33-80; page 4, line 44 - page 8, line 100 * | 2,4,12 ,13,16 -18 | **TECHNICAL FIELDS SEARCHED (Int. Cl.4)**<br><br>A 01 D |
| A | GB-A-2 022 506 (PATENT CONCERN)<br>* Page 3, lines 16-57; page 4, lines 20-30 * | 2-7 | |
| A | GB-A-1 580 340 (BUCHER-GUYER) | | |

-/-

The present search report has been drawn up for all claims

| Place of search | Date of completion of the search | Examiner |
|---|---|---|
| THE HAGUE | 09-11-1987 | DE LAMEILLIEURE D. |

Application number

EP 87 20 1539

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | NL-A-7 301 115 (ZWEEGERS) | | |

-----

TECHNICAL FIELDS SEARCHED (Int. Cl.4)

The present search report has been drawn up for all claims

| Place of search | Date of completion of the search | Examiner |
|---|---|---|
| THE HAGUE | 09-11-1987 | DE LAMEILLIEURE D. |

EPO Form 1503 03.82